# FASCICULE DE BREVET EUROPEEN

(11) **EP 1 470 984 B1**
(45) Date de publication et mention de la délivrance du brevet: **03.09.2014**
(21) Numéro de dépôt: 04291042.2
(22) Date de dépôt: 22.04.2004
(51) Int. Cl.: B65F 1/14, B62B 5/00, B62B 1/26

(54) **Dispositif destiné à faciliter la manipulation d'un bac à deux roues de collecte de déchets**
Vorrichtung zur Erleichterung der Handhabung eines zweiräderigen Abfallsammelbehälters
Device for facilitating the manipulation of a two-wheeled refuse-collecting container

(30) Priorité: 23.04.2003 FR 0304963
(43) Date de publication de la demande: 27.10.2004
(73) Titulaire: COMPAGNIE PLASTIC OMNIUM, 69007 Lyon (FR)
(72) Inventeur: Van Schaaik, Alphonses Jozephus, 5043 ZJ Tilburg (NL)
(74) Mandataire: Remy, Vincent Noel Paul

(56) Documents cités:
- DE-A1- 19 645 831
- GB-A- 2 266 280
- US-A- 3 008 595
- US-A1- 2002 140 191
- DATABASE WPI Section PQ, Week 200146, Derwent Publications Ltd., London, GB; Class Q35, AN 2001-431055, XP002263678 -& NL 1 014 836 C1 (BESSELING, HENDRIKUS;FRANZEN, ALBERT;WOONING, JOHANNES LOUIS) 10 Octobre 2000

## Description

La présente invention a pour objet un dispositif destiné notamment à faciliter la manipulation d'un bac à deux roues de collecte de déchets.

L'utilisation de bacs roulants de collecte de déchets comportant deux roues à l'arrière de la cuve est largement répandue.

Ce type de bacs comporte, de manière connue en soi, une cuve, un couvercle et au moins une poignée située à l'arrière de la partie supérieure de la cuve permettant à un utilisateur de faire pivoter le bac sur les roues afin de le faire rouler et le déplacer.

Pour accomplir cette opération, l'utilisateur doit être à l'arrière du bac pour pouvoir saisir la ou les poignées.

Des difficultés peuvent apparaître lorsque le bac est rangé dans un espace étroit et la où les poignées sont difficilement accessibles pour un utilisateur.

La présente invention vise notamment à faciliter la manipulation, en particulier le déplacement, d'un bac de collecte de déchets comportant deux roues à l'arrière de la cuve.

On connaît par le brevet NL 1 014 836 qui divulgue les caractéristiques du préambule de la revendication 1 un dispositif à fixer sur une cuve d'un bac de collecte de déchets, ce dispositif comportant une roue et des moyens de fixation pour solidariser le dispositif sur le bas et le haut de la cuve.

Ce dispositif est dépourvu de partie supérieure de préhension car la manipulation du bac se fait grâce à la poignée sur l'arrière de la cuve.

L'invention a pour objet un ensemble selon la revendication 1.

Grâce à l'invention, en engageant le dispositif à l'avant de la cuve du bac, il est possible de mettre le bac roulant en appui sur ses deux roues et sur la roue du dispositif.

L'appui du bac sur trois roues simultanément permet de le manipuler, notamment de le déplacer facilement, même lorsqu'il est lourdement chargé.

L'invention est particulièrement avantageuse lorsque le bac roulant est rangé dans un espace étroit, ne permettant pas d'accéder facilement à la ou aux poignées à l'arrière du bac, puisque le bac peut être déplacé par un utilisateur se trouvant devant.

L'invention est particulièrement adaptée à une utilisation en intérieur, par exemple dans un hall d'exposition.

De plus, le fait que le dispositif soit indépendant du bac roulant permet de ranger ce dispositif lorsqu'il n'est pas utilisé, de sorte qu'il ne pose pas de problème d'encombrement.

En outre la liaison entre la cuve et le dispositif est localisée uniquement sur le bas de la cuve, le dispositif étant séparé de la cuve à sa partie supérieure, de sorte que, pour déplacer la cuve, un utilisateur doit d'abord exercer une force suffisante pour faire pivoter le dispositif par rapport à la cuve et mettre l'ensemble en appui sur trois roues.

Le dispositif selon l'invention reste libre de pivoter par rapport à la cuve après mise en place du dispositif sur le bac.

L'invention permet une mise en place aisée du dispositif sur la cuve, notamment par rapport au dispositif décrit dans le brevet NL 1 014 836 précité qui nécessite une fixation sur le bas et le haut de la cuve.

Avantageusement, le manche est monolithe, étant notamment de longueur constante.

Avantageusement, l'organe de fixation comporte une gorge apte à s'engager sur une nervure inférieure de la cuve.

Lorsque l'organe de fixation et la roue intersectent un même axe, la gorge peut s'étendre sensiblement perpendiculairement à cet axe.

Dans un exemple de mise en oeuvre de l'invention, l'organe de fixation comporte deux parois planes parallèles, reliées entre elles par une paroi de fond et définissant la gorge précitée.

L'organe de fixation peut être disposé à l'extrémité inférieure du manche, étant par exemple fixé en son milieu à ce manche.

Dans un exemple de mise en oeuvre de l'invention, la roue est montée sur un palier fixé sur un côté avant du manche, la roue pouvant être montée pivotante sur ce palier.

Le manche peut comporter une section transversale sensiblement rectangulaire, notamment carrée, et être coudé.

L'invention sera mieux comprise à la lecture de la description détaillée qui va suivre, d'un exemple de mise en oeuvre non limitatif, et à l'examen du dessin annexé, sur lequel :
- la figure 1 représente schématiquement et partiellement un dispositif conforme à l'invention,
- la figure 2 illustre schématiquement et partiellement l'utilisation du dispositif de la figure 1 pour déplacer un bac roulant, et
- la figure 3 est une vue de détails, schématique et partielle, du dispositif coopérant avec le bac roulant.

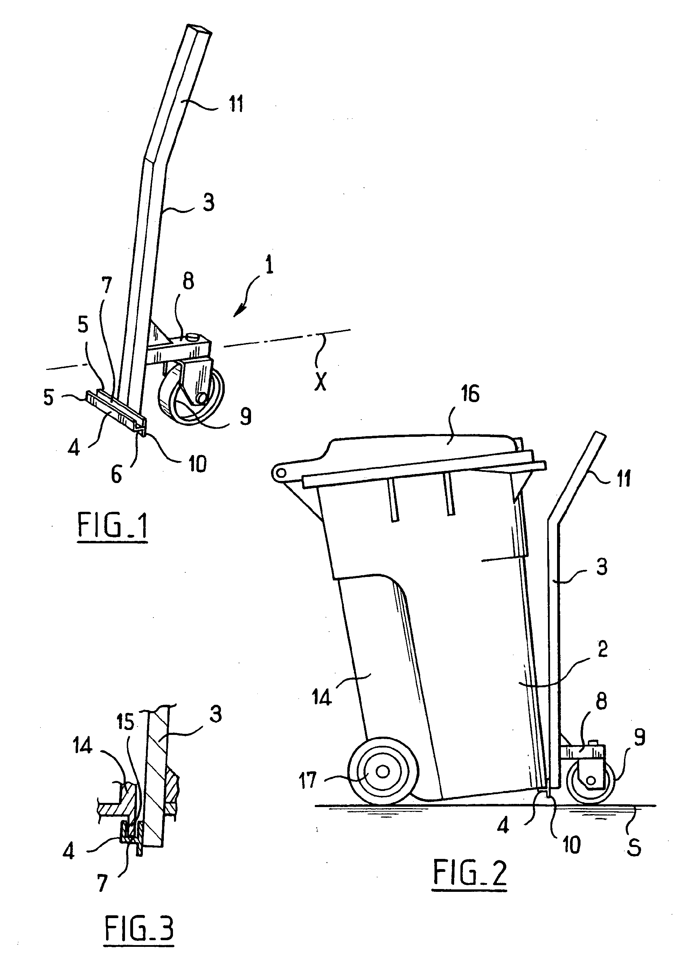

On a représenté sur la figure 1 un dispositif 1 conforme à l'invention, destiné à faciliter la manipulation d'un bac roulant de collecte de déchets 2.

Ce dispositif 1 comporte un manche coudé 3 à l'extrémité inférieure duquel, sur son côté arrière, est disposé un organe de fixation 4.

Le manche 3 supporte à l'avant un palier 8 portant une roue pivotante 9.

L'organe de fixation 4 et la roue 9 sont sensiblement alignés sur un axe X.

L'organe de fixation 4 comporte deux parois planes parallèles 5 reliées entre elles par une paroi de fond 6 et définissant une gorge 7 dont le rôle sera expliqué plus loin.

La gorge 7 s'étend perpendiculairement à l'axe X.

L'organe de fixation 4 comporte inférieurement une nervure 10 en saillie de la paroi de fond 6. Au repos, la nervure 10 est en appui sur le sol S.

Le manche 3 comporte une partie supérieure de préhension 11 et est réalisé, dans l'exemple considéré, à partir d'un tube métallique ayant une section transversale carrée.

Le bac 2 comporte une cuve 14 à l'extrémité inférieure de laquelle une nervure 15 fait saillie, et un couvercle 16 articulé à la partie arrière de la cuve 14.

La cuve 14 comporte en outre deux roues 17 à l'arrière.

Le dispositif 1 s'utilise de la manière suivante.

L'utilisateur commence par positionner l'organe de fixation 4 sous la cuve 14 du bac 2 de manière à engager la nervure inférieure 15 de la cuve 14 dans la gorge 7 de l'organe de fixation 4, comme représenté sur la figure 3.

L'avant du bac 2 repose alors sur l'organe de fixation 4.

En exerçant un basculement sur le manche 3, l'utilisateur peut relever l'avant du bac 2, comme illustré sur la figure 2, de sorte que celui-ci soit en appui sur ses deux roues arrières 16.

L'organe de fixation 4 du dispositif 1 se trouve alors à une distance non nulle du sol S.

Comme on peut le voir sur la figure 2, la charge du bac 2 est répartie sur trois appuis, à savoir les deux roues 17 du bac et la roue 9 du dispositif 1.

Ainsi, le bac 2 peut être facilement déplacé même lorsqu'il est lourdement chargé.

De plus, un utilisateur peut déplacer le bac 2 en étant à l'avant.

Bien entendu, l'invention n'est pas limitée à l'exemple de mise en oeuvre qui vient d'être décrit.

## Revendications

1. Ensemble d'un bac de collecte de déchets du type comportant une cuve (14), un couvercle (16), et deux roues (17) à l'arrière de la cuve et d'un dispositif (1) destiné à faciliter la manipulation du bac, le dispositif comportant :
- un manche (3) avec une partie supérieure de préhension (11),
- au moins une roue (9) disposée à l'avant du manche (3),
- au moins un organe de fixation (4) disposé à l'arrière du manche (3) et apte à venir en prise du dessous de la cuve (14) du bac (2), en prenant une position dans laquelle la roue (9) du dispositif (1) est en contact avec le sol (S) et l'organe de fixation (4) est à une distance non nulle du sol (S),
**caractérisé en ce que** le dispositif est dépourvu de moyens de fixation autres que ledit organe de fixation (4).

2. Ensemble selon la revendication précédente, **caractérisé par le fait que** le dispositif reste libre de pivoter par rapport à la cuve après mise en place de l'organe de fixation (4) sous le bac.

3. Ensemble selon l'une quelconque des revendications précédentes, **caractérisé par le fait que** l'organe de fixation (4) comporte une gorge (7) apte à s'engager sur une nervure inférieure (15) de la cuve.

4. Ensemble selon la revendication 4, l'organe de fixation (4) et la roue (9) intersectant un même axe (X), **caractérisé par le fait que** ladite gorge (7) s'étend sensiblement perpendiculairement à cet axe (X).

5. Ensemble selon l'une des revendications précédentes, **caractérisé par le fait que** l'organe de fixation (4) comporte deux parois planes (5) parallèles, reliées entre elles par une paroi de fond (6) et définissant ladite gorge (7).

6. Ensemble selon l'une quelconque des revendications précédentes, **caractérisé par le fait que** l'organe de fixation (4) est disposé à l'extrémité inférieure du manche (3).

7. Ensemble selon l'une quelconque des revendications précédentes, **caractérisé par le fait que** la roue (9) est montée sur un palier (8) fixé sur un coté avant du manche (3).

8. Ensemble selon la revendication précédente, **caractérisé par le fait que** la roue (9) est montée pivotante sur le palier (8).

9. Ensemble selon l'une quelconque des revendications précédentes, **caractérisé par le fait que** le manche (3) comporte une section transversale sensiblement rectangulaire, notamment carrée.

10. Ensemble selon l'une quelconque des revendications précédentes, **caractérisé par le fait que** le manche (3) est coudé.

## Patentansprüche

1. Anordnung aus einem Abfallsammelbehälter des Typs, der einen Trog (14), einen Deckel (16) und zwei Räder (17) an der Hinterseite des Trogs aufweist, und aus einer Vorrichtung (1), die dazu bestimmt ist, die Handhabung des Behälters zu erleichtern, wobei die Vorrichtung Folgendes aufweist:
- einen Griffstiel (3) mit einem oberen Griffteil (11),
- mindestens ein Rad (9), das an der Vorderseite des Griffstiels (3) angeordnet ist,
- mindestens ein Befestigungsorgan (4), das an der Hinterseite des Griffstiels (3) angeordnet ist und geeignet ist, um mit der Unterseite des Trogs (14) des Behälters (2) in Eingriff zu kommen, indem es eine Position einnimmt, in der das Rad (9) der Vorrichtung (1) mit dem Boden (S) in Berührung ist und das Befestigungsorgan (4) in einem Abstand ungleich Null vom Boden (S) ist, **dadurch gekennzeichnet, dass** die Vorrichtung keine anderen Befestigungsmittel als das Befestigungsorgan (4) hat.

2. Anordnung nach dem vorhergehenden Anspruch, **dadurch gekennzeichnet, dass** die Vorrichtung nach dem Positionieren des Befestigungsorgans (4) unter dem Behälter relativ zu dem Trog frei schwenkbar bleibt.

3. Anordnung nach einem der vorhergehenden Ansprüche, **dadurch gekennzeichnet, dass** das Befestigungsorgan (4) eine Rille (7) aufweist, die geeignet ist, um in eine untere Rippe (15) des Trogs einzugreifen .

4. Anordnung nach Anspruch 4, wobei das Befestigungsorgan (4) und das Rad (9) ein und diesselbe Achse (X) schneiden, **dadurch gekennzeichnet, dass** sich die Rille (7) im Wesentlichen lotrecht zu dieser Achse (X) erstreckt.

5. Anordnung nach einem der vorhergehenden Ansprüche, **dadurch gekennzeichnet, dass** das Befestigungsorgan (4) zwei parallele ebene Wände (5) aufweist, die durch eine Bodenwand (6) miteinander verbunden sind und die Rille (7) definieren.

6. Anordnung nach einem der vorhergehenden Ansprüche, **dadurch gekennzeichnet, dass** das Befestigungsorgan (4) an dem unteren Ende des Griffstiels (3) angeordnet ist.

7. Anordnung nach einem der vorhergehenden Ansprüche, **dadurch gekennzeichnet, dass** das Rad (9) an einem Lager (8) gelagert ist, das an einer vorderen Seite des Griffstiels (3) befestigt ist.

8. Anordnung nach dem vorhergehenden Anspruch, **dadurch gekennzeichnet, dass** das Rad (9) an dem Lager (8) schwenkbar gelagert ist.

9. Anordnung nach einem der vorhergehenden Ansprüche, **dadurch gekennzeichnet, dass** der Griffstiel (3) einen Querschnitt aufweist, der im Wesentlichen rechtwinklig, insbesondere quadratisch ist.

10. Anordnung nach einem der vorhergehenden Ansprüche, **dadurch gekennzeichnet, dass** der Griffstiel (3) gekrümmt ist.

## Claims

1. Assembly of a waste collection bin of type comprising a container (14), a lid (16) and two wheels (17) at the back of the container and a device (1) intended to simplify the handling of the bin, the device comprising:
- a handle (3) with an upper gripping part (11),
- at least one wheel (9) arranged at the front of the handle (3),
- at least one attachment member (4) arranged behind the handle (3) and capable of engaging under the container (14) of the bin (2), taking a position in which the wheel (9) of the device (1) is in contact with the ground (S) and the attachment member (4) is at a non-zero distance from the ground (S),
**characterised in that** the device has no attachment means other than said attachment member (4).

2. Assembly according to the preceding claim, **characterised in that** the device remains free to pivot with respect to the container after positioning the attachment member (4) under the bin.

3. Assembly according to any of the preceding claims, **characterised in that** the attachment member (4) comprises a groove (7) capable of engaging on a lower rib (15) of the container.

4. Assembly according to claim 4, the attachment member (4) and the wheel (9) intersecting along the same axis (X), **characterised in that** said groove (7) extends substantially perpendicular to this axis (X).

5. Assembly according to one of the preceding claims, **characterised in that** the attachment member (4) comprises flat parallel walls (5), connected together by a bottom wall (6) and defining said groove (7).

6. Assembly according to any of the preceding claims, **characterised in that** the attachment member (4) is arranged at the bottom end of the handle (3).

7. Assembly according to any of the preceding claims, **characterised in that** the wheel (9) is mounted on a bearing (8) attached to a front side of the handle (3).

8. Assembly according to the preceding claim, **characterised in that** the wheel (9) is pivotally mounted on the bearing (8).

9. Assembly according to any of the preceding claims, **characterised in that** the handle (3) comprises a substantially rectangular, especially square, cross-section.

10. Assembly according to any of the preceding claims, **characterised in that** the handle (3) is bent.
